# EUROPEAN PATENT APPLICATION

(11) **EP 2 413 540 A1**
(43) Date of publication of application: **01.02.2012**
(21) Application number: 09842522.6
(22) Date of filing: 08.12.2009
(51) Int. Cl.: H04L 12/56

(54) **METHOD, DEVICE AND SYSTEM FOR ADVERTISING INTER-DOMAIN LINK INFORMATION AND COMPUTING INTER-DOMAIN ROUTE**

(30) Priority: 31.03.2009 CN 200910106421
(71) Applicant: Huawei Technologies Co., Ltd., Shenzhen, Guangdong 518129 (CN)
(72) Inventor: CHEN, Baolian, Shenzhen Guangdong 518129 (CN); XIA, Hongmiao, Shenzhen Guangdong 518129 (CN)
(74) Representative: Körber, Martin Hans
(86) International application number: PCT/CN2009/075378
(87) International publication number: WO 2010/111866

(57) **Abstract**

The present invention discloses a method for announcing cross-area link information, where two ends of a cross-area link are respectively a first end node and a second end node, and the first end node and the second end node belong to the same Autonomous System (AS). The method includes: generating, by the first end node, first cross-area link information, where the first cross-area link information includes address information of the first end node, address information of the second end node, area address information of an area where the first end node is located, and area address information of an area where the second end node is located; and sending, by the first end node, the first cross-area link information. The present invention further discloses an apparatus for announcing cross-area link information, and a method, an apparatus and a system for computing a cross-area path. Through technology solutions according to embodiments of the present invention, announcement of the cross-area link information is accomplished, static route configuration is not required, and division of an original area is not changed, which can avoid easy occurrence of mistakes and a slow configuration speed caused by the static route configuration.

## Description

This application claims priority to Chinese Patent Application No. 200910106421.1, filed on March 31, 2009 and entitled "Method and apparatus for announcing cross-area link information, and method, apparatus, and system for computing cross-area path", the contents of which are incorporated herein by reference in their entireties.

### FIELD OF THE INVENTION

The present invention relates to the field of communication technologies, and in particular to a method and an apparatus for announcing cross-area link information, and a method, an apparatus, and a system for computing a cross-area path.

### BACKGROUND OF THE INVENTION

In recent years, traffic of the internet increases exponentially all the time. With the continuous rising of new services such as WEB2.0, Point to Point (P2P), video sharing, and Internet Protocol Television (IPTV), and the gradual deployment of high-speed broadband such as the Very High Speed Digital Subscriber Line (VDSL) and the Gigabit-capable Passive Optical Network (GPON), the traffic of the internet may maintain fast growth in a long time, and the capacity problem may become the biggest challenge for the network development.

In the prior art, in the traffic grooming of the network, the traffic with large granularity directly passes through an optical-layer channel by means of a direct optical path, and is not required to be forwarded through a router, which alleviates the burden of the forwarding router and eases the capacity problem.

In the prior art, one Autonomous System (AS) is divided into a plurality of route areas, which ensures extensibility and security of the network. A link in the AS may be an intra-area link or an inter-area link, and two end nodes of the inter-area link are not in the same route area and the two end nodes are all boundary routers of the route area. If the planned direct optical path is a cross-area link, that is, the two end nodes are not in the same route area and at least one end node is not the boundary router, in the prior art, a static route configuration method is used to re-divide the original area, and configure the cross-area link to be an intra-area link or an inter-area link. Such re-division of the area may bring great inconvenience to management, and the static route configuration has high requirements for operators, which results in easy occurrence of mistakes and a slow configuration speed.

### SUMMARY OF THE INVENTION

Embodiments of the present invention provide a method and an apparatus for announcing cross-area link information, and a method, an apparatus, and a system for computing a cross-area path, which may realize the announcement of the cross-area link information.

A method for announcing cross-area link information, where two ends of the cross-area link are respectively a first end node and a second end node, and the first end node and the second end node belong to the same AS. The method includes:
generating, by the first end node, first cross-area link information, where the first cross-area link information includes address information of the first end node, address information of the second end node, area address information of an area where the first end node is located, and area address information of an area where the second end node is located; and
sending, by the first end node, the first cross-area link information.

A method for computing a cross-area path, where an AS includes a cross-area link, and two ends of the cross-area link are respectively a first end node and a second end node. The method includes:
receiving cross-area link information, where the cross-area link information includes address information of the first end node, address information of the second end node, area address information of an area where the first end node is located, and area address information of an area where the second end node is located;
determining at least one alternative area sequence of the cross-area path according to the cross-area link information; and
computing specific path information corresponding to each area sequence, and selecting the path information for creating the cross-area path.

A method for computing a cross-area path, where an AS includes a first end node, a second end node, a third node and a fourth node, and an cross-area link exists between the first end node and the second end node. The method includes:
receiving, by the third node, cross-area link information, where the cross-area link information includes address information of the first end node, address information of the second end node, area address information of an area where the first end node is located, and area address information of an area where the second end node is located;
receiving, by the third node, network segment information, where the network segment information includes network segment information of the area where the second end node is located, and the area address information of the area where the second end node is located; and
comparing a metric from a boundary node of an area where the third node is located to the fourth node with a metric from the first end node to the fourth node, and using the node with the minimum metric as an intermediate node to obtain cross-area path information from the third node through the intermediate node to the fourth node, if the third node determines, according to the cross-area link information, that the third node and the first end node are located in the same area, and determines, according to the network segment information and the cross-area link information, that the fourth node and the second end node are located in the same area.

An apparatus for announcing cross-area link information, where two ends of the cross-area link are respectively a first end node and a second end node, and the first end node and the second end node belong to the same AS. The apparatus includes:
a cross-area link information generating module, configured to generate first cross-area link information, where the first cross-area link information includes address information of the first end node, address information of the second end node, area address information of an area where the first end node is located, and area address information of an area where the second end node is located; and
a cross-area link information sending module, configured to send the first cross-area link information.

An apparatus for computing a cross-area path, where an AS includes a cross-area link, and two ends of the cross-area link are respectively a first end node and a second end node. The apparatus includes:
a receiving module, configured to receive first cross-area link information, where the first cross-area link information includes address information of the first end node, address information of the second end node, area address information of an area where the first end node is located, and area address information of an area where the second end node is located;
an area sequence determining module, configured to determine at least one alternative area sequence of the cross-area path according to the first cross-area link information; and
a computing and selecting module, configured to compute specific path information corresponding to each area sequence, and select path information for creating the cross-area path.

An apparatus for computing a cross-area path, where an AS includes a first end node, a second end node, a third node and a fourth node, and a cross-area link exists between the first end node and the second end node. The apparatus includes:
a receiving module, configured to: receive cross-area link information, where the cross-area link information includes address information of the first end node, address information of the second end node, area address information of an area where the first end node is located, and area address information of an area where the second end node is located; and receive second network segment information, where the second network segment information includes network segment information of the area where the second end node is located and the area address information of the area where the second end node is located; and
a selection module, configured to compare a metric from a boundary node of an area where the third node is located to the fourth node with a metric from the first end node to the fourth node and use the node with the minimum metric as an intermediate node to obtain cross-area path information from the third node through the intermediate node to the fourth node, if the third node determines, according to the cross-area link information, that the third node and the first end node are located in the same area, and determines, according to the network segment information and the cross-area link information, that the fourth node and the second end node are located in the same area.

A system for computing a cross-area path, where an AS includes a cross-area link, and two ends of the cross-area link are respectively a first end node and a second end node. The system includes:
an apparatus for announcing cross-area link information, configured to: generate cross-area link information, where the cross-area link information includes address information of the first end node, address information of the second end node, area address information of an area where the first end node is located, and area address information of an area where the second end node is located; and send the first cross-area link information; and
an apparatus for computing a cross-area path, configured to receive the cross-area link information, determine at least one alternative area sequence of the cross-area path according to the cross-area link information, compute specific path information corresponding to each area sequence, and select path information for creating the cross-area path.

A system for computing a cross-area path, where an AS includes a first end node, a second end node, a third node and a fourth node, and a cross-area link exists between the first end node and the second end node. The system includes:
an apparatus for announcing cross-area link information, configured to: generate cross-area link information, where the cross-area link information includes address information of the first end node, address information of the second end node, area address information of an area where the first end node is located, and area address information of an area where the second end node is located; and send the first cross-area link information;
an apparatus for announcing network segment information, configured to: generate the network segment information, where the network segment information includes network segment information of the area where the second end node is located and the area address information of the area where the second end node is located; and flood the network segment information in the AS; and
an apparatus for computing the cross-area path, configured to: receive the cross-area link information; receive the network segment information; and compare a metric from a boundary node of an area where the third node is located to the fourth node with a metric from the first end node to the fourth node and use the node with the minimum metric as an intermediate node to obtain cross-area path information from the third node through the intermediate node to the fourth node, if the third node determines, according to the cross-area link information, that the third node and the first end node are located in the same area, and determines, according to the network segment information and the cross-area link information, that the fourth node and the second end node are located in the same area.

Through the technical solutions of the embodiments of the present invention, the cross-area link information is generated and sent through the end node of the cross-area link, and thereby the announcement of the cross-area link information is accomplished. Moreover, it is not required to perform static route configuration and division of the original area is not changed, which can avoid easy occurrence of mistakes and a slow configuration speed caused by the static route configuration.

### BRIEF DESCRIPTION OF THE DRAWINGS

FIG. 1 is a flow chart of a method for announcing cross-area link information according to an embodiment of the present invention;
FIG. 2 is a flow chart of another method for announcing cross-area link information according to an embodiment of the present invention;
FIG. 3 is a network topology diagram of computing a cross-area path according to an embodiment of the present invention;
FIG. 4 is a flow chart of a method for computing a cross-area path according to an embodiment of the present invention;
FIG. 5 is a flow chart of another method for computing a cross-area path according to an embodiment of the present invention;
FIG. 6 is a structure diagram of an apparatus for announcing cross-area link information according to an embodiment of the present invention;
FIG. 7 is a structure diagram of an apparatus for computing a cross-area path according to an embodiment of the present invention;
FIG. 8 is a structure diagram of another apparatus for computing a cross-area path according to an embodiment of the present invention;
FIG. 9 is a structure diagram of a system for computing a cross-area path according to an embodiment of the present invention; and
FIG. 10 is a structure diagram of another system for computing a cross-area path according to an embodiment of the present invention.

### DETAILED DESCRIPTION OF THE EMBODIMENTS

In order to make the objectives, technical solutions, and advantages of the present invention clearer, the present invention is further described in detail below with reference to embodiments and the accompanying drawings.

### Embodiment 1

A method for announcing cross-area link information, where two ends of the cross-area link are respectively a first end node and a second end node, and the first end node and the second end node belong to the same AS, includes: generating, by the first end node, first cross-area link information, where the first cross-area link information includes address information of the first end node, address information of the second end node, area address information of an area where the first end node is located, and area address information of an area where the second end node is located; and sending, by the first end node, the first cross-area link information.

The sending, by the first end node, the first cross-area link information may be specifically as follows: sending, by the first end node, the first cross-area link information to a Path Computation Element (PCE), or flooding, by the first end node, the first cross-area link information in the AS.

The first end node stores the address information of the first end node, the address information of the second end node, the area address information of the area where the first end node is located, and the area address information of the area where the second end node is located, which belongs to the prior art and is not described in detail herein again.

In addition to the cross-area link generated by a direct optical path, other cross-area links may also be announced by using the foregoing method, such as the cross-area link generated by Virtual Network Topology (VNT) in a multi-layer network.

In this embodiment, an end node of the cross-area link generates and sends the cross-area link information, and the announcement of the cross-area link information is accomplished. Moreover, it is not required to perform static route configuration and division of an original area is not changed, which can avoid easy occurrence of mistakes and a slow configuration speed caused by the static route configuration.

### Embodiment 2

A method for announcing cross-area link information, where two ends of the cross-area link are respectively a first end node and a second end node, and the first end node and the second end node belong to the same AS, includes: generating, by the first end node, first cross-area link information, where the first cross-area link information includes address information of the first end node, address information of the second end node, area address information of an area where the first end node is located, and area address information of an area where the second end node is located; sending, by the first end node, the first cross-area link information; generating, by the second end node, second cross-area link information, where the second cross-area link information includes the address information of the first end node, the address information of the second end node, the area address information of the area where the first end node is located, and the area address information of the area where the second end node is located; and sending, by the second end node, the second cross-area link information.

In this embodiment, in order to be consistent with the general technologies, the two end nodes of the cross-area link both generate the cross-area link information and flood the cross-area link information in the AS.

The sending, by the first end node, the first cross-area link information may be specifically as follows: sending, by the first end node, the first cross-area link information to a PCE, or flooding, by the first end node, the first cross-area link information in the AS.

The sending, by the second end node, the second cross-area link information may be specifically as follows: sending, by the second end node, the second cross-area link information to a PCE, or flooding, by the second end node, the second cross-area link information in the AS.

In this embodiment, the two end nodes of the cross-area link both generate and send the cross-area link information, and the announcement of the cross-area link information is accomplished. Moreover, it is not required to perform static route configuration and division of an original area is not changed, which can avoid easy occurrence of mistakes and a slow configuration speed caused by the static route configuration.

### Embodiment 3

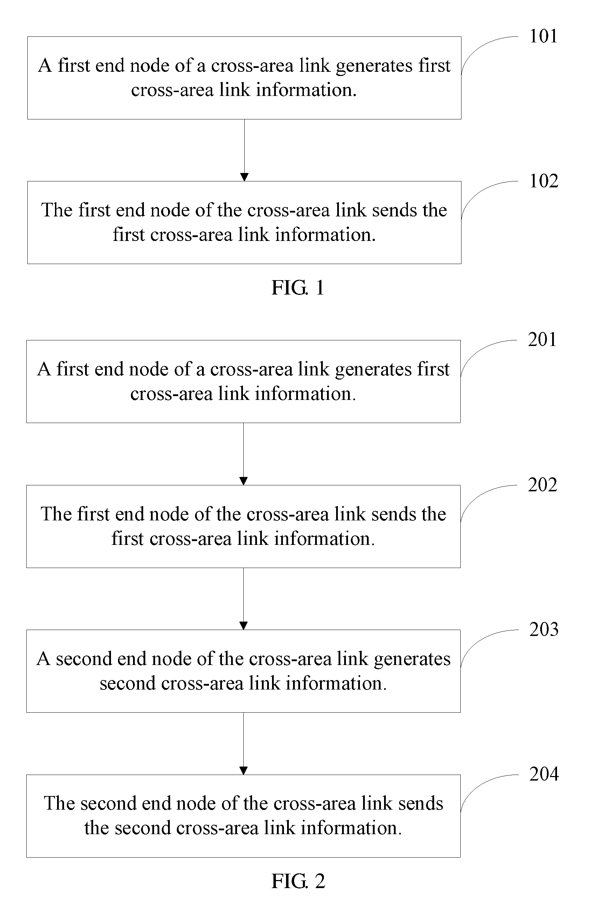

A method for announcing cross-area link information is provided, where a router is used as a node of an AS for description. The following takes the case that the router of the AS supports an Open Shortest Path First (OSPF) protocol for example to describe in detail the method for announcing the cross-area link information. Two ends of the cross-area link are respectively a first end node and a second end node, and the first end node and the second end node belong to the same AS. As shown in FIG. 1, the method specifically includes the following steps.

S101: The first end node of the cross-area link generates first cross-area link information.

The Internet Engineering Task Force (IETF) defines three transparent Link State Advertisements (LSAs) to deliver various pieces of link state information for easy extension of the OSPF, and the difference of the three LSAs lies in that flooding ranges are different. Type 9 is used to perform flooding in the link, Type 10 is used to perform flooding in the area, and Type 11 is used to perform flooding in the AS.

In this embodiment, an LSA is newly added: an inter-area LSA, which is the Type 11 LSA. It can be known that, the flooding range of such LSA is the entire AS. An inter-area type is newly added in link type sub-Tag, Length, Value (TLV) of the inter-area LSA, which indicates that the LSA carries the cross-area link information.

A sub-TLV type is newly added for the inter-area LSA, that is an inter-area sub-TLV, and a format thereof is as shown in Table 1, in which a Local Area Number is an area number of a cross-area link local end, that is, area address information of an area where the first end node is located; a Local router ID is a router ID of the cross-area link local end, that is, address information of the first end node; a Remote Area Number is the area number of a cross-area link remote end, that is, area address information of an area where the second end node is located; and a Remote router ID is the router ID of the cross-area link remote end, that is, the address information of the second end node.

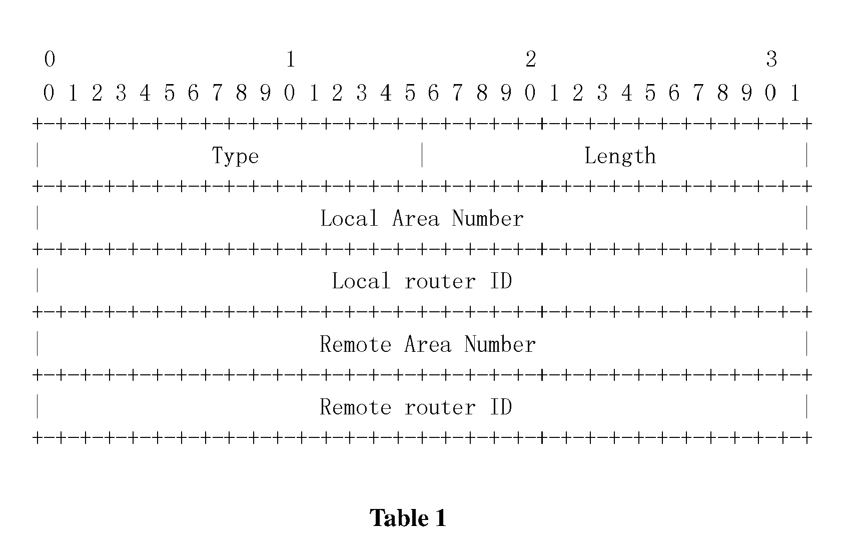

In this embodiment, the first end node of the cross-area link generates the cross-area link information, that is, the inter-area LSA is generated, where the inter-area LSA includes the link type sub-TLV and the inter-area sub-TLV. It can be known from the foregoing description that, the inter-area sub-TLV includes the address information of the first end node, the address information of the second end node, the area address information of the area where the first end node is located, and the area address information of the area where the second end node is located.

S102: The first end node of the cross-area link sends the first cross-area link information.

In this embodiment, the first end node of the cross-area link floods the first cross-area link information in the AS.

In this embodiment, the first end node of the cross-area link floods the first cross-area link information in the AS, while in another embodiment, the first end node of the cross-area link sends the first cross-area link information to a PCE, and the principles are the same, which are not described in detail herein again.

In this embodiment, the OSPF protocol is extended, and one end node of the cross-area link generates the cross-area link information and floods the information in the AS, and the announcement of the cross-area link information is accomplished. Moreover, it is not required to perform static route configuration and division of an original area is not changed, which can avoid easy occurrence of mistakes and a slow configuration speed caused by the static route configuration.

### Embodiment 4

A method for announcing cross-area link information is provided. The following takes the case that a router of an AS supports an Intermediate System to Intermediate System (ISIS) protocol for example to describe in detail the method for announcing the cross-area link information. Two ends of the cross-area link are respectively a first end node and a second end node, and the first end node and the second end node belong to the same AS. As shown in FIG. 2, the method specifically includes the following steps.

S201: The first end node of the cross-area link generates first cross-area link information. A kind of TLV is newly added in this embodiment, that is, first inter-area TLV, as shown in Table 2, and the fields therein are as follows.

S: The range of TLV flooding is set to be 1 and indicates that flooding is performed in the entire AS.

D: A direction of the TLV flooding may be up or down, where "up" is represented by 0 and "down" is represented by 1. The up direction indicates that the TLV is the flooding from Level 1 to Level 2, and the down direction indicates that the TLV is the flooding from Level 2 to Level 1, where Level 1 and Level 2 are layers divided by the ISIS protocol for each route area. The D field is filled in according to the layer of the area where the cross-area link end node generating the TLV is located, may be changed when the link information is forwarded on an area boundary node, and is rewritten according to the forwarding direction. When the flooding is performed from Level 1 to Level 2, D=0, and when the flooding is performed from Level 2 to Level 1, D=1.

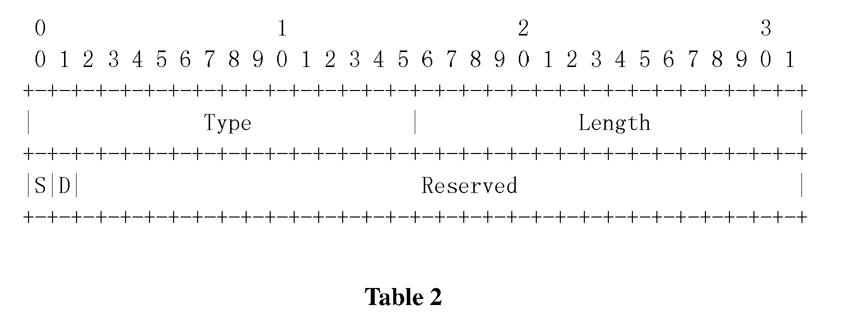

A sub-TLV type is newly added for the first inter-area TLV, that is, first inter-area sub-TLV, and a format thereof is as shown in Table 3, in which a Local Area Number is an area number of a cross-area link local end, that is, area address information of an area where the first end node is located; a Local router ID is a router ID of the cross-area link local end, that is, address information of the first end node; a Remote Area Number is the area number of a cross-area link remote end, that is, area address information of an area where the second end node is located; and a Remote router ID is the router ID of the cross-area link remote end, that is, the address information of the second end node.

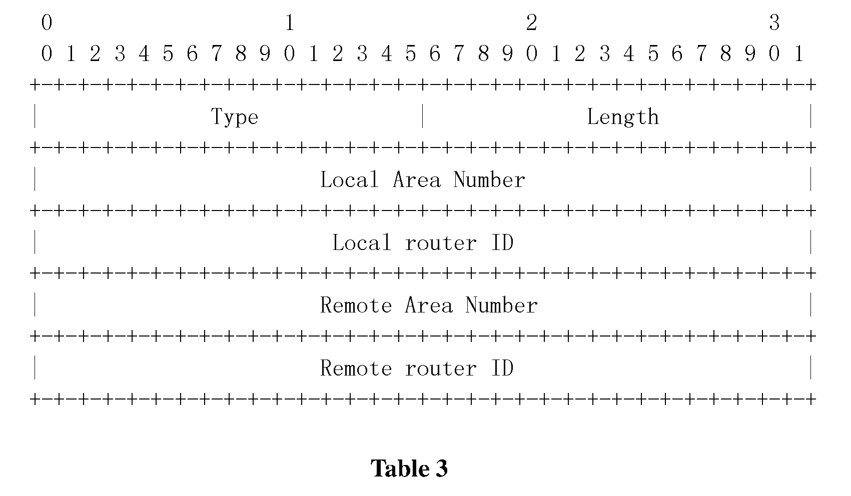

In this embodiment, the first end node of the cross-area link generates the first cross-area link information, that is, the first inter-area TLV is generated, where the first inter-area TLV includes the first inter-area sub-TLV. It can be known from the foregoing description that, the first inter-area sub-TLV includes the address information of the first end node, the address information of the second end node, the area address information of the area where the first end node is located, and the area address information of the area where the second end node is located.

S202: The first end node of the cross-area link sends the first cross-area link information.

In this embodiment, the first end node of the cross-area link floods the first cross-area link information in the AS.

S203: The second end node of the cross-area link generates second cross-area link information.

A kind of TLV is newly added in this embodiment, that is, second inter-area TLV, and meanings of the fields are the same as the meanings in S201. A sub-TLU type is newly added for the second inter-area TLV, that is, second inter-area sub-TLU, and a format thereof is as shown in Table 3, in which a Local Area Number is an area number of a cross-area link local end, that is, area address information of an area where the second end node is located; a Local router ID is a router ID of the cross-area link local end, that is, address information of the second end node; a Remote Area Number is the area number of a cross-area link remote end, that is, area address information of an area where the first end node is located; and a Remote router ID is the router ID of the cross-area link remote end, that is, the address information of the first end node.

In this embodiment, the second end node of the cross-area link generates the second cross-area link information, that is, the second inter-area TLV is generated, where the second inter-area TLV includes the second inter-area sub-TLV. It can be known from the foregoing description that, the second inter-area sub-TLV includes the address information of the first end node, the address information of the second end node, the area address information of the area where the first end node is located, and the area address information of the area where the second end node is located.

S204: The second end node of the cross-area link sends the second cross-area link information.

In this embodiment, the second end node of the cross-area link floods the second cross-area link information in the AS.

In this embodiment, the ISIS protocol is extended, and the two end nodes of the cross-area link generate the cross-area link information and flood the information in the AS, and the announcement of the cross-area link information is accomplished. Moreover, it is not required to perform static route configuration and division of an original area is not changed, which can avoid easy occurrence of mistakes and a slow configuration speed caused by the static route configuration.

### Embodiment 5

A method for announcing cross-area link information, where two ends of the cross-area link are respectively a first end node and a second end node, and the first end node and the second end node belong to the same AS, includes: generating, by the first end node, first cross-area link information, where the first cross-area link information includes address information of the first end node, address information of the second end node, area address information of an area where the first end node is located, and area address information of an area where the second end node is located; and sending, by the first end node, the first cross-area link information.

A first boundary node of the area where the first end node is located generates first network segment information, where the first network segment information includes network segment information of the area where the first end node is located, and the area address information of the area where the first end node is located; and the first boundary node floods the first network segment information in the AS.

In this embodiment, the first network segment information is flooded, so that the node in the AS obtains the node information included in the area where the first end node is located while obtaining the cross-area link information, which facilitates the use of the cross-area link.

In this embodiment, the case that a router of the AS supports an OSPF protocol is taken for example for detailed description of a flooding method of the first network segment information.

A Summary-LSA of the OSPF protocol is extended to increase area number information corresponding to the network segment, and specific content thereof is as shown in Table 4, in which fields therein are as follows:
LS age: time after the LSA is generated, where LS age is measured in seconds;
Link State ID: a sub-network prefix of the announced area for a Type3 LSA;
Advertising Router: a router ID of an initialization LSA;
LS sequence number: a sequence number of the LSA, according to which other routers may determine which LSA is the latest according to the value;
LS checksum: a check summation of all the LSA information except the LS age field;
Length: total length of the LSA;
Network Mask: a network address mask of the Type3 LSA;
Metric: a metric;
TOS: a service type; and
TOS metric: the metric of the service type.

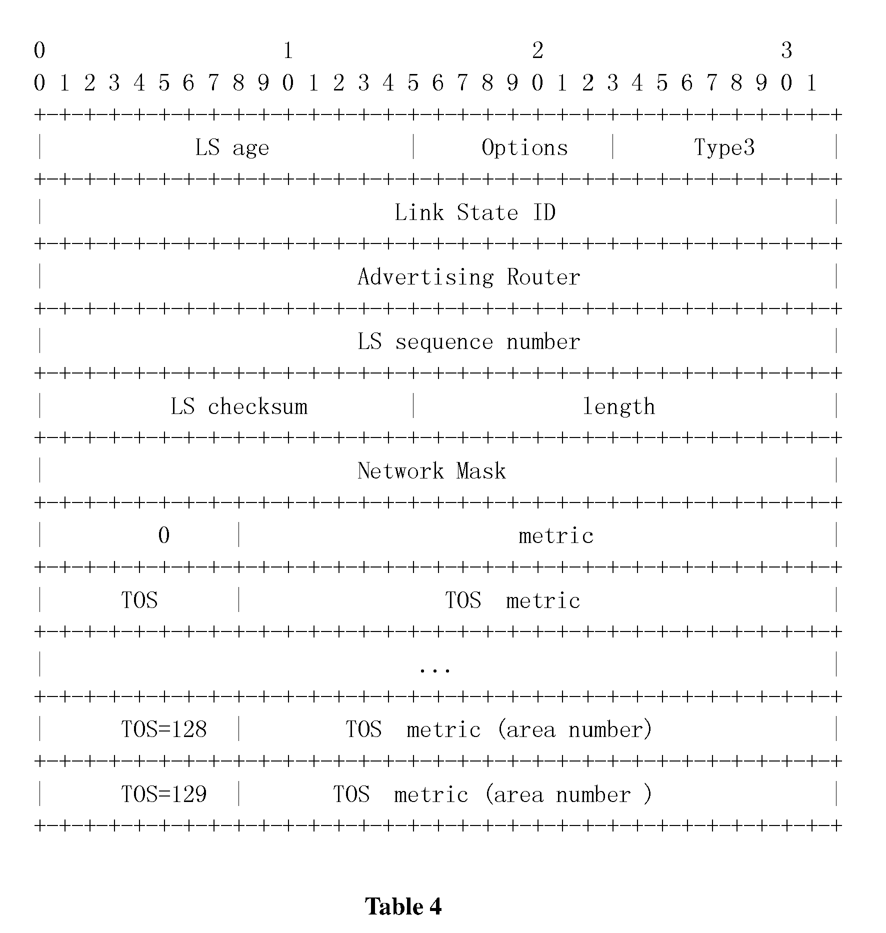

The last two rows in the foregoing table are the newly added contents, and other fields are the same as the fields in the prior art, where Link State ID and Network Mask describes the network segment information.

In the OSPF protocol, TOS uses definitions of 0-30 only, and other unused values may be used to extend and announce an area address (an area number) of the Summary-LSA. In this embodiment, the definitions are as follows:
when TOS=128, the values of the last two bytes of the TOS metric indicate the first two bytes of the area number; and
when TOS=129, the values of the last two bytes of the TOS metric indicate the last two bytes of the area number.

In this embodiment, a first boundary node of the area where the first end node is located generates the foregoing Summary-LSA, where the LSA includes the network segment information of the area where the first end node is located, which is described by Link State ID and Network Mask, and the area address information of the area where the first end node is located, which is described by foregoing extended content.

In another embodiment, in order to be consistent with the general technologies, all the boundary nodes of the area where the first end node is located generate and flood the first network segment information.

In another embodiment, the first network segment information may be generated by the first end node and is flooded in the AS, and a principle thereof is the same, which is not described in detail herein again.

In this embodiment, one end node of the cross-area link generates and floods the cross-area link information in the AS, and thereby announcement of the cross-area link information is accomplished. Moreover, it is not required to perform static route configuration and division of an original area is not changed, which can avoid easy occurrence of mistakes and a slow configuration speed caused by the static route configuration. Meanwhile, the first boundary node of the area where the first end node is located generates and floods the first network segment information, so that the node in the AS obtains the node information included in the area where the first end node is located while obtaining the cross-area link information, which facilitates the use of the cross-area link.

### Embodiment 6

A method for announcing cross-area link information, where two ends of the cross-area link are respectively a first end node and a second end node, and the first end node and the second end node belong to the same AS, includes: generating, by the first end node, first cross-area link information, in which the first cross-area link information includes address information of the first end node, address information of the second end node, area address information of an area where the first end node is located, and area address information of an area where the second end node is located; and sending, by the first end node, the first cross-area link information.

A first boundary node of the area where the first end node is located generates first network segment information, where the first network segment information includes network segment information of the area where the first end node is located, and the area address information of the area where the first end node is located; and the first boundary node floods the first network segment information in the AS.

A second boundary node of the area where the second end node is located generates second network segment information, where the second network segment information includes network segment information of the area where the second end node is located, and the area address information of the area where the second end node is located; and the second boundary node floods the second network segment information in the AS.

In this embodiment, the first network segment information and the second network segment information are flooded, so that the node in the AS obtains the node information included in the area where the first end node is located and the node information included in the area where the second end node is located while obtaining the cross-area link information, which facilitates the use of the cross-area link.

In this embodiment, the case that a router of the AS supports an ISIS protocol is taken for example for detailed description of a flooding method of the second network segment information.

Extended IP Reachability TLV of the ISIS protocol is extended, and Area Reachability sub-TLV is newly added, as shown in Table 5.

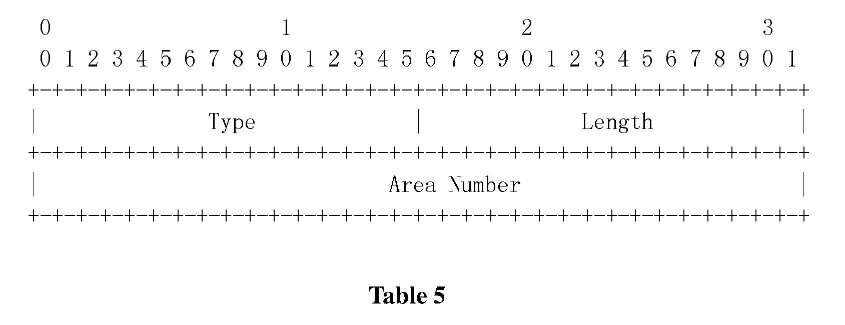

Description of the network segment exists in the Extended IP Reachability TLV, and the node in the network may determine the area address information corresponding to the network segment through the foregoing extension.

In this embodiment, a second boundary node of the area where the second end node is located generates the foregoing Extended IP Reachability TLV, where the TLV includes the network segment information of the area where the first end node is located, which is described by Extended IP Reachability TLV, and the area address information of the area where the first end node is located, which is described by Area Reachability sub-TLV.

In this embodiment, one end node of the cross-area link generates and floods the cross-area link information in the AS, and the announcement of the cross-area link information is accomplished. Moreover, it is not required to perform static route configuration and division of an original area is not changed, which can avoid easy occurrence of mistakes and a slow configuration speed caused by the static route configuration. Meanwhile, the first network segment information and the second network segment information are flooded, so that the node in the AS obtains the node information included in the area where the first end node is located and the node information included in the area where the second end node is located while obtaining the cross-area link information, which facilitates the use the cross-area link.

### Embodiment 7

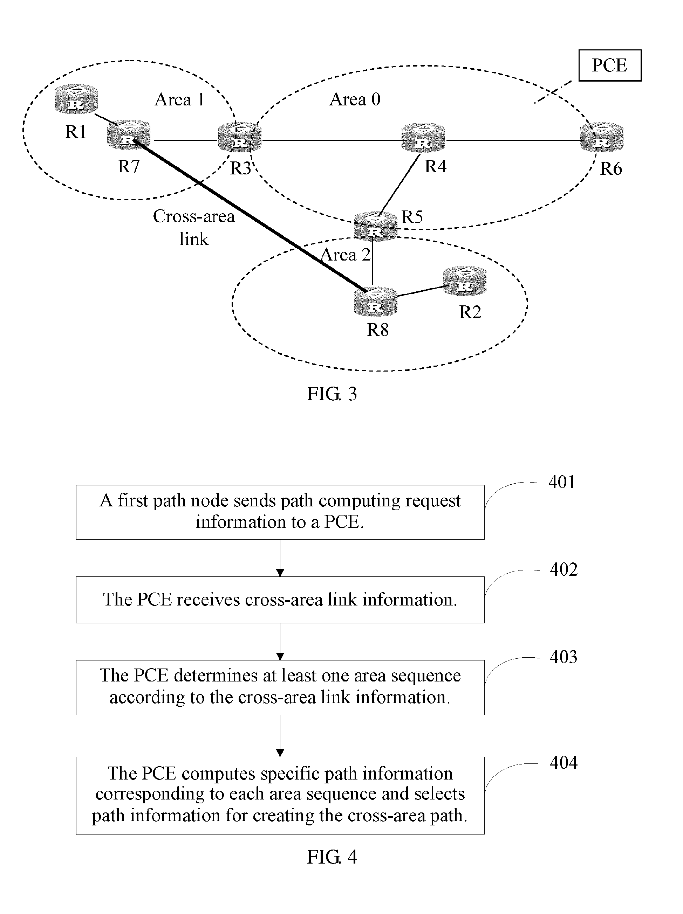

A method for computing a cross-area path is provided, and as shown in FIG. 3, an AS includes a cross-area link, and two ends of the cross-area link are respectively a first end node R7 and a second end node R8. A path from R1 to R2 needs to be computed, and the network includes a PCE or other nodes having a computation function. As shown in FIG. 4, the steps for computing a path include the following.

S401: A first path node sends route computing request information to the PCE.

In this embodiment, R1 requests the PCE to compute a path from R1 to R2; and in another embodiment, the request information may be sent by other nodes.

S402: The PCE receives cross-area link information.

In this embodiment, the PCE receives the cross-area link information, where the cross-area link information includes address information of the first end node (R7), address information of the second end node (R8), area address information (area 1) of an area where the first end node is located, and area address information (area 2) of an area where the second end node is located. After receiving the cross-area link information, the PCE may use the cross-area link when computing the cross-area path.

S403: The PCE determines at least one alternative area sequence of the cross-area path according to the cross-area link information. The cross-area path passes through a series of areas, each of which has an area address, and arrangement of the area address from the first path node to a path last node is the area sequence.

In this embodiment, only one cross-area link exists, and it can be known according to the cross-area link information that, the cross-area link can be directly connected to an area 1 and an area 2. In another embodiment, a plurality of cross-area links may exist, and a principle thereof is the same, which is not described in detail herein again.

The first path node is located in the area 1, the path last node is located in the area 2, and the PCE determines the alternative area sequence according to the cross-area link information, which is as follows:
1. When the cross-area link is not taken into consideration, the area sequence is area 1-area 0-area 2; and
2. When the cross-area link is taken into consideration, the area sequence is area 1-area 2.

S404: The PCE computes specific path information corresponding to the area sequence, and selects the path information for creating the cross-area path.

In this embodiment, in the case that the area sequence is area 1-area 0-area 2, the specific path information is: R1-R7-R3-R4-R5-R8-R2; and in the case that the area sequence is area 1-area 2, the specific path information is: R1-R7-R8-R2. The specific path computation after the determination of the area sequence is the prior art, which is not described in detail herein again.

In this embodiment, the PCE compares the computed paths, selects the optimal path according to hop count and traffic, and returns the first path node, for example, the optimal path obtained through selection is: R1-R7-R8-R2.

In this embodiment, the cross-area link information is used to compute the cross-area path, the cross-area path is selected by comparing the specific path information corresponding to various area sequences, and thereby the optimized cross-area path can be obtained.

### Embodiment 8

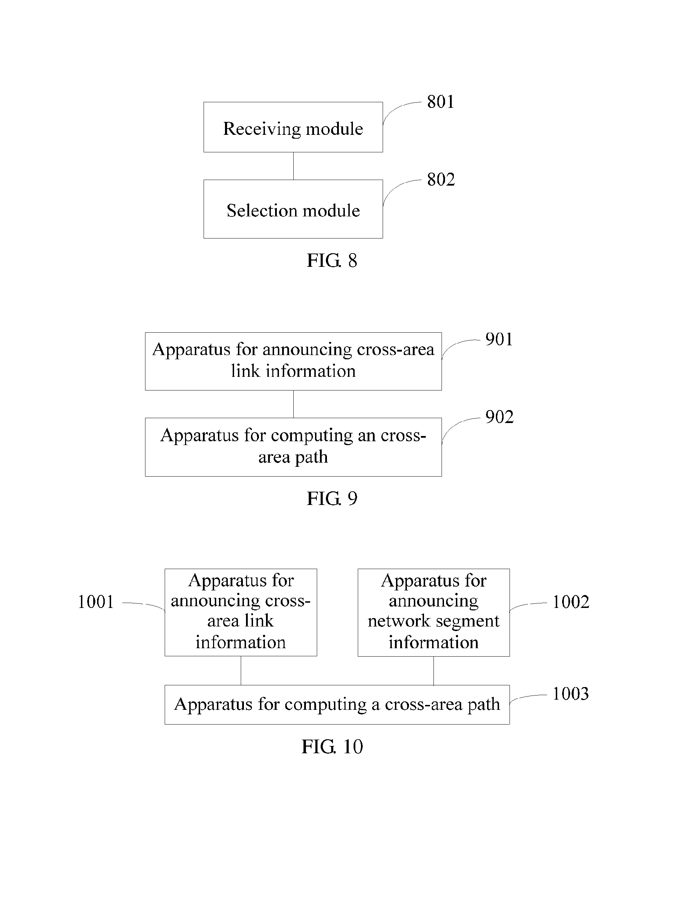

A method for computing a cross-area path is provided, and as shown in FIG. 3, an AS includes a first end node, a second end node, a third node, and a fourth node, where a cross-area link exists between the first end node and the second end node, and the third node R3 needs to compute a cross-area path to the fourth node R4. As shown in FIG. 8, the steps for computing a path include the following.

S501: The third node receives cross-area link information.

In this embodiment, the third node R1 receives the cross-area link information, where the cross-area link information includes address information of the first end node (R7), address information of the second end node (R8), area address information (area 1) of an area where the first end node is located, and area address information (area 2) of an area where the second end node is located. After receiving the cross-area link information, the first path node may use the cross-area link when computing the cross-area path.

S502: The third node receives network segment information.

In this embodiment, the third node R1 receives the network segment information, where the network segment information includes network segment information of the area where the second end node (R8) is located, and the area address information (area 2) of the area where the second end node (R8) is located.

S503: Select an intermediate node.

If the third node determines, according to the cross-area link information, that the third node and the first end node are located in the same area, and determines, according to the network segment information and the cross-area link information, that the fourth node and the second end node are located in the same area, a metric from a boundary node of an area where the third node is located to the fourth node is compared with a metric from the first end node to the fourth node, and the node with the minimum metric is used as the intermediate node to obtain cross-area path information from the third node, through the intermediate node, to the fourth node.

In the prior art, the third node stores the area address information of the area where the third node is located, but only stores address information of the fourth node rather than area address information of the area where the fourth node is located.

In this embodiment, according to the area address information of the area where the first end node is located in the cross-area link information and the area address information of the area where the local node is located stored in the third node, if it is determined that the third node and the first end node are located in the same area, then:

Nodes included in the area where the second end node (R8) is located may be obtained according to the network segment information of the area where R8 is located in the network segment information. If the fourth node R4 is one of the nodes, the area address information of the area where R4 is located is obtained according to the network segment information, and it is determined that R4 and R8 are located in the same area according to the cross-area link information, then:

A metric from a boundary node of the area where R1 is located to R2 is compared with the metric from R7 to R2, where the metric is in the prior art and is not described in detail herein again. If the metric from the boundary node R3 of the area where R1 is located to R2 is 5, and the metric from R7 to R2 is 3, R7 is the intermediate node through comparison and is selected as the intermediate node, and the cross-area path R1-R7-R8-R2 is obtained accordingly.

In this embodiment, the cross-area link information is used to perform the cross-area path computation, and the intermediate node is selected through the metric to determine the cross-area path, and thereby the optimized cross-area path can be obtained.

### Embodiment 9

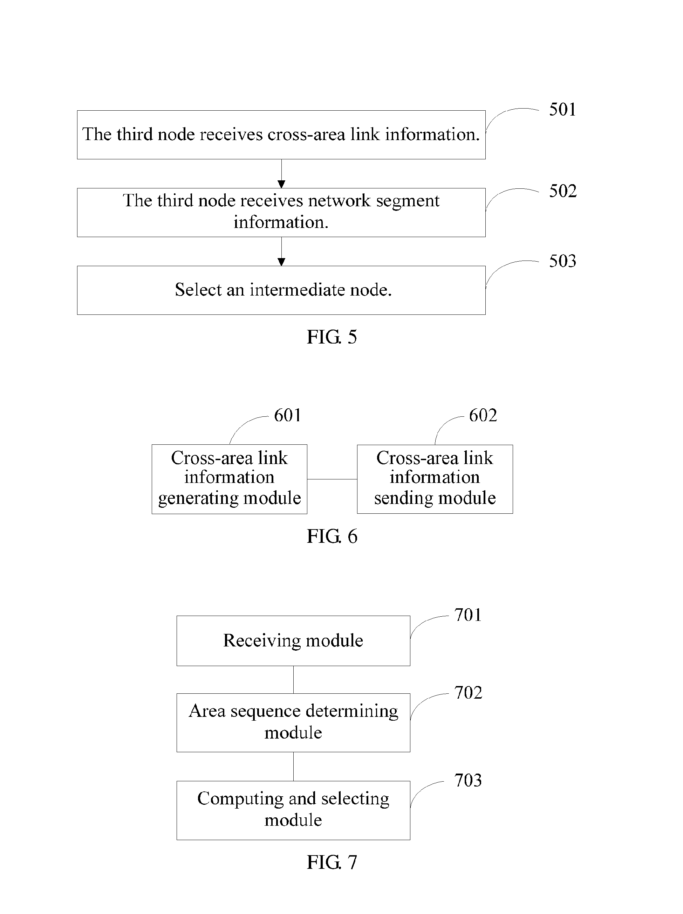

An apparatus for announcing cross-area link information, where two ends of the cross-area link are respectively a first end node and a second end node, and the first end node and the second end node belong to the same AS, as shown in FIG. 6, includes:
a cross-area link information generating module 601, configured to generate first cross-area link information, where the first cross-area link information includes address information of the first end node, address information of the second end node, area address information of an area where the first end node is located, and area address information of an area where the second end node is located; and
a cross-area link information sending module 602, configured to send the first cross-area link information.

Since information interaction between and executing processes of the modules of the foregoing apparatus are based on the same concept as that of the method embodiment of the present invention, as for the specific contents, reference can be made to the description in the method embodiment of the present invention, which is not described in detail herein again.

In the apparatus of this embodiment, the two end nodes of the cross-area link both generate the cross-area link information and flood the information in the AS, and announcement of the cross-area link information is accomplished. Moreover, it is not required to perform static route configuration and division of an original area is not changed, which can avoid easy occurrence of mistakes and a slow configuration speed caused by the static route configuration.

### Embodiment 10

An apparatus for computing a cross-area path, where an AS includes a cross-area link, and two ends of the cross-area link are respectively a first end node and a second end node, as shown in FIG. 7, includes:
a receiving module 701, configured to receive first cross-area link information, in which the first cross-area link information includes address information of the first end node, address information of the second end node, area address information of an area where the first end node is located, and area address information of an area where the second end node is located;
an area sequence determining module 702, configured to determine at least one alternative area sequence of the cross-area path according to the first cross-area link information; and
a computing and selecting module 703, configured to compute specific path information corresponding to each area sequence, and select the path information for creating the cross-area path.

Since information interaction between and executing processes of the modules of the foregoing apparatus are based on the same concept as that of the method embodiment of the present invention, as for the specific content, reference can be made to the description in the method embodiment of the present invention, which is not described in detail herein again.

In the apparatus of this embodiment, the cross-area link information is used to perform the cross-area path computation, the cross-area path is selected by comparing the specific path information corresponding to various area sequences, and thereby the optimized cross-area path can be obtained.

### Embodiment 11

An apparatus for computing a cross-area path, where an AS includes a first end node, a second end node, a third node and a fourth node, and a cross-area link exists between the first end node and the second end node, as shown in FIG. 8, includes:
a receiving module 801, configured to: receive cross-area link information, where the cross-area link information includes address information of the first end node, address information of the second end node, area address information of an area where the first end node is located, and area address information of an area where the second end node is located; and receive second network segment information, where the second network segment information includes network segment information of the area where the second end node is located, and the area address information of the area where the second end node is located; and
a selection module 802, configured to compare a metric from a boundary node of an area where the third node is located to the fourth node with a metric from the first end node to the fourth node and use the node with the minimum metric as an intermediate node to obtain cross-area path information from the third node through the intermediate node to the fourth node, if it is determined, according to the cross-area link information, that the third node and the first end node are located in the same area, and it is determined, according to the network segment information and the cross-area link information, that the fourth node and the second end node are located in the same area.

Since information interaction between and executing processes of the modules of the foregoing apparatus are based on the same concept as that of the method embodiment of the present invention, as for the specific content, reference can be made to the description in the method embodiment of the present invention, which is not described in detail herein again.

In the apparatus of this embodiment, the cross-area link information is used to perform the cross-area path computation, and the intermediate node is selected through the metric to determine the cross-area path, and thereby the optimized cross-area path can be obtained.

### Embodiment 12

A system for computing a cross-area path, where an AS includes a cross-area link, and two ends of the cross-area link are respectively a first end node and a second end node, as shown in FIG. 9, includes:
an apparatus for announcing cross-area link information 901, configured to: generate cross-area link information, where the cross-area link information includes address information of the first end node, address information of the second end node, area address information of an area where the first end node is located, and area address information of an area where the second end node is located; and send the first cross-area link information; and
an apparatus for computing a cross-area path 902, configured to receive the cross-area link information, determine at least one alternative area sequence of the cross-area path according to the cross-area link information, and compute specific path information corresponding to each area sequence and select path information for creating the cross-area path.

Since information interaction between and executing processes of the apparatuses of the foregoing system are based on the same concept as that of the method embodiment of the present invention, as for the specific contents, reference can be made to the description in the method embodiment of the present invention, which is not described in detail herein again.

In the system of this embodiment, the cross-area link information is used to perform the cross-area path computation, the cross-area path is selected by comparing the specific path information corresponding to various area sequences, and thereby the optimized cross-area path can be obtained.

### Embodiment 13

A system for computing a cross-area path, where an AS includes a first end node, a second end node, a third node and a fourth node, and a cross-area link exists between the first end node and the second end node, as shown in FIG. 10, includes:
an apparatus for announcing cross-area link information 1001, configured to: generate cross-area link information, where the cross-area link information includes address information of the first end node, address information of the second end node, area address information of an area where the first end node is located, and area address information of an area where the second end node is located; and send the first cross-area link information;
an apparatus for announcing network segment information 1002, configured to: generate the network segment information, where the network segment information includes network segment information of the area where the second end node is located and the area address information of the area where the second end node is located; and flood the network segment information in the AS; and
an apparatus for computing a cross-area path 1003, configured to: receive the cross-area link information; receive the network segment information; and compare a metric from a boundary node of an area where the third node is located to the fourth node with a metric from the first end node to the fourth node and use the node with the minimum metric as an intermediate node to obtain cross-area path information from the third node through the intermediate node to the fourth node, if the third node determines, according to the cross-area link information, that the third node and the first end node are located in the same area, and determines, according to the network segment information and the cross-area link information, that the fourth node and the second end node are located in the same area.

Since information interaction between and executing processes of the apparatuses of the foregoing system are based on the same concept as that of the method embodiment of the present invention, as for the specific contents, reference can be made to the description in the method embodiment of the present invention, which is not described in detail herein again.

In the system of this embodiment, the cross-area link information is used to perform the cross-area path computation, and the intermediate node is selected through the metric to determine the cross-area path, and thereby the optimized cross-area path can be obtained.

Through the foregoing description of the implementation, it is clear to persons skilled in the art that the present invention may be realized by means of software plus a necessary hardware platform. All or a part of the foregoing technical solutions of the present invention that makes contributions to the background technology can be embodied in the form of a software product. The computer software product may be stored in a storage medium such as a ROM/RAM, a magnetic disk or an optical disk, and include several instructions to instruct computer equipment (for example, a personal computer, a server, or network equipment) to perform the methods described in the embodiments of the present invention or in some parts of the embodiments.

The foregoing descriptions are embodiments of the present invention. It should be noted by persons of ordinary skill in the art that modifications and variations may be made without departing from the principle of the present invention, which should be construed as falling within the scope of the present invention.

## Claims

1. A method for announcing cross-area link information, wherein two ends of the cross-area link are respectively a first end node and a second end node, and the first end node and the second end node belong to a same Autonomous System (AS), the method comprising:
generating, by the first end node, first cross-area link information, wherein the first cross-area link information comprises address information of the first end node, address information of the second end node, area address information of an area where the first end node is located, and area address information of an area where the second end node is located; and
sending, by the first end node, the first cross-area link information.

2. The method according to claim 1, wherein the sending, by the first end node, the first cross-area link information comprises:
sending, by the first end node, the first cross-area link information to a Path Computation Element (PCE); or
flooding, by the first end node, the first cross-area link information in the AS.

3. The method according to claim 1, further comprising:
generating, by the second end node, second cross-area link information, wherein the second cross-area link information comprises the address information of the first end node, the address information of the second end node, the area address information of the area where the first end node is located, and the area address information of the area where the second end node is located; and
sending, by the second end node, the second cross-area link information.

4. The method according to claim 1, 2 or 3, further comprising:
generating, by a first boundary node of the area where the first end node is located, first network segment information, wherein the first network segment information comprises network segment information of the area where the first end node is located, and the area address information of the area where the first end node is located; and
flooding, by the first boundary node, the first network segment information in the AS.

5. The method according to claim 4, further comprising:
generating, by a second boundary node of the area where the second end node is located, second network segment information, wherein the second network segment information comprises network segment information of the area where the second end node is located, and the area address information of the area where the second end node is located; and
flooding, by the second boundary node, the second network segment information in the AS.

6. A method for computing a cross-area path, wherein an Autonomous System (AS) comprises a cross-area link, and two ends of the cross-area link are respectively a first end node and a second end node, the method comprising:
receiving cross-area link information, wherein the cross-area link information comprises address information of the first end node, address information of the second end node, area address information of an area where the first end node is located, and area address information of an area where the second end node is located;
determining at least one alternative area sequence of the cross-area path according to the cross-area link information; and
computing specific path information corresponding to each area sequence, and selecting path information for creating the cross-area path.

7. A method for computing a cross-area path, wherein an Autonomous System (AS) comprises a first end node, a second end node, a third node and a fourth node, and a cross-area link exists between the first end node and the second end node, the method comprising:
receiving, by the third node, cross-area link information, wherein the cross-area link information comprises address information of the first end node, address information of the second end node, area address information of an area where the first end node is located, and area address information of an area where the second end node is located;
receiving, by the third node, network segment information, wherein the network segment information comprises network segment information of the area where the second end node is located, and the area address information of the area where the second end node is located; and
comparing a metric from a boundary node of an area where the third node is located to the fourth node with a metric from the first end node to the fourth node and using the node with the minimum metric as an intermediate node to obtain cross-area path information from the third node through the intermediate node to the fourth node, if the third node determines, according to the cross-area link information, that the third node and the first end node are located in the same area, and determines, according to the network segment information and the cross-area link information, that the fourth node and the second end node are located in the same area.

8. An apparatus for announcing cross-area link information, wherein two ends of the cross-area link are respectively a first end node and a second end node, and the first end node and the second end node belong to a same Autonomous System (AS), the apparatus comprising:
a cross-area link information generating module, configured to generate first cross-area link information, wherein the first cross-area link information includes address information of the first end node, address information of the second end node, area address information of an area where the first end node is located, and area address information of an area where the second end node is located; and
a cross-area link information sending module, configured to send the first cross-area link information.

9. An apparatus for computing a cross-area path, wherein an Autonomous System (AS) comprises a cross-area link, and two ends of the cross-area link are respectively a first end node and a second end node, the apparatus comprising:
a receiving module, configured to receive first cross-area link information, wherein the first cross-area link information comprises address information of the first end node, address information of the second end node, area address information of an area where the first end node is located, and area address information of an area where the second end node is located;
an area sequence determining module, configured to determine at least one alternative area sequence of the cross-area path according to the first cross-area link information; and
a computing and selecting module, configured to compute specific path information corresponding to each area sequence, and select path information for creating the cross-area path.

10. An apparatus for computing a cross-area path, wherein an Autonomous System (AS) comprises a first end node, a second end node, a third node and a fourth node, a cross-area link exists between the first end node and the second end node, the apparatus comprising:
a receiving module, configured to: receive cross-area link information, wherein the cross-area link information comprises address information of the first end node, address information of the second end node, area address information of an area where the first end node is located, and area address information of an area where the second end node is located; and receive second network segment information, wherein the second network segment information comprises network segment information of the area where the second end node is located and the area address information of the area where the second end node is located; and
a selection module, configured to compare a metric from a boundary node of an area where the third node is located to the fourth node with a metric from the first end node to the fourth node and use the node with the minimum metric as an intermediate node to obtain cross-area path information from the third node through the intermediate node to the fourth node, if the third node determines, according to the cross-area link information, that the third node and the first end node are located in the same area, and determines, according to the network segment information and the cross-area link information, that the fourth node and the second end node are located in the same area.

11. A system for computing a cross-area path, wherein an Autonomous System (AS) comprises a cross-area link, and two ends of the cross-area link are respectively a first end node and a second end node, the system comprising:
an apparatus for announcing cross-area link information, configured to: generate cross-area link information, wherein the cross-area link information comprises address information of the first end node, address information of the second end node, area address information of an area where the first end node is located, and area address information of an area where the second end node is located; and send the first cross-area link information; and
an apparatus for computing a cross-area path, configured to: receive the cross-area link information, determine at least one alternative area sequence of the cross-area path according to the cross-area link information, and compute specific path information corresponding to each area sequence and select path information for creating the cross-area path.

12. A system for computing a cross-area path, wherein an Autonomous System (AS) comprises a first end node, a second end node, a third node and a fourth node, a cross-area link exists between the first end node and the second end node, the system comprising:
an apparatus for announcing cross-area link information, configured to: generate cross-area link information, wherein the cross-area link information comprises address information of the first end node, address information of the second end node, area address information of an area where the first end node is located, and area address information of an area where the second end node is located; and send the first cross-area link information;
an apparatus for announcing network segment information, configured to: generate the network segment information, wherein the network segment information comprises network segment information of the area where the second end node is located, and the area address information of the area where the second end node is located; and flood the network segment information in the AS; and
an apparatus for computing the cross-area path, configured to: receive the cross-area link information; receive the network segment information; and compare a metric from a boundary node of an area where the third node is located to the fourth node with a metric from the first end node to the fourth node and use the node with the minimum metric as an intermediate node to obtain cross-area path information from the third node to through the intermediate node the fourth node, if the third node determines, according to the cross-area link information, that the third node and the first end node are located in the same area, and determines according to the network segment information and the cross-area link information, that the fourth node and the second end node are located in the same area.
